# EUROPEAN PATENT SPECIFICATION

(11) **EP 2 076 401 B1**
(45) Date of publication and mention of the grant of the patent: **03.07.2013**
(21) Application number: 07835255.6
(22) Date of filing: 21.09.2007
(51) Int. Cl.: B60G 17/015, F04B 49/06, F04B 49/08, B60G 17/018

(54) **A SYSTEM AND A METHOD FOR CONTROLLING A PNEUMATIC PRESSURE IN A VEHICLE**
SYSTEM UND VERFAHREN ZUR STEUERUNG EINES PNEUMATISCHEN DRUCKS IN EINEM FAHRZEUG
SYSTEME ET PROCEDE PERMETTANT DE REGULER UNE PRESSION PNEUMATIQUE DANS UN VEHICULE

(30) Priority: 25.09.2006 SE 0601991
(43) Date of publication of application: 08.07.2009
(73) Proprietor: Scania CV AB (PUBL), 151 87 Södertälje (SE)
(72) Inventor: SVENSSON, Robert, S-64692 Gnesta (SE)
(86) International application number: PCT/SE2007/050670
(87) International publication number: WO 2008/039145

(56) References cited:
- WO-A1-2006/071170
- DE-A1- 3 815 612
- GB-A- 2 223 331
- SE-A- 8 901 581
- US-A1- 2004 084 860
- US-A1- 2004 084 860

## Description

### THE BACKGROUND OF THE INVENTION AND PRIOR ART

The present invention relates generally to automatic control of vehicle chassis elements. More particularly the invention relates to a system according to the preamble of claim 1 and a motor vehicle according to claim 8. The invention also relates to a method of adjusting an elevation of a motor vehicle's chassis element according to the preamble of claim 9, a computer program product according to claim 16 and a computer readable medium according to claim 17. An example of such an automatic control system and of such a method is disclosed by US 2004/0084 860 A1.

In heavy vehicles, such as trucks, busses and tractors, having pneumatic suspension systems, it is usually advantageous to provide a possibility to adjust the pressure level in the suspension system. Namely, thereby varying load levels and load distributions can be compensated for. Naturally, building up a pneumatic pressure is associated with energy consumption, and to economize the vehicle's fuel resources it is key that compressor be used intelligently.

DE 103 60 231 discloses a hydraulically operated suspension, which includes a flypump with an adjustable lifting ring. Here, the flypump may be controlled to produce an overpressure to provide a necessary volume of hydraulic fluid. However, since the hydraulic fluid is essentially incompressible, it is difficult to create a pressure buffer in connection with such an increase of the pressure above the normal operating level. Hence, the pump must be operated each time the high pressure is required.

DE 198 60 233 describes a suspension system of hydraulic and/or hydropneumatic type, wherein a highly pressurized hydraulic accumulator is connected to a pressure line if a control signal for volume flow of the pump exceeds a threshold value. At the same time, the pump is controlled at its maximum output capacity. Thus, potentially excessive energy is consumed. W02006/071170 describes a compressed air system on a vehicle, which system predicts future demands for compressed air. If the vehicle is travelling at a geographic location in which the vehicle is assumed to require more compressed air, e.g. an uphill or an industrial area, the pressure level in the compressed air system is increased.

In vehicular pneumatic systems two distinct pressure levels are normally defined, a so-called cut-in level at which the compressor starts to operate (i.e. increases the pneumatic system pressure), and a so-called cut-out level at which the compressor stops (i.e. does not increase the pneumatic system pressure any further). The trend today is that a growing number of vehicle functions require a comparatively high pneumatic pressure. To make sure that adequate pressure is provided for these applications it is desirable to increase the overall system pressure. While it is un-problematic to elevate the cut-in level, it is more complicated and expensive to elevate the cut-out level. The problem could be partially solved by exclusively elevating the cut-in level. However, this strategy results in a relatively small pressure span between the cut-in and cut-out levels. Thereby, it also becomes difficult to select instances at which to charge the pressure buffer that are advantageous with respect to fuel economy, e.g. when engine braking. A small span will normally require that the pressure buffer often be charged at non-optimal instances.

### SUMMARY OF THE INVENTION

The object of the present invention is therefore to provide a solution, which alleviates the problems above, and thus offers an energy efficient control of an adjustable chassis element relative to at least one wheel pair of a vehicle, e.g. in connection with elevation of the chassis and/or a load transfer between the wheel axles carrying the chassis.

According to one aspect of the invention, the object is achieved by the initially described system, wherein the system includes a sensor means, which is adapted to register a parameter indicative of a measured value expressing the position relationship between the chassis element and the at least one wheel pair. The sensor means is adapted to forward data representing the measured value to the control unit. This unit, in turn, is further adapted to compare the measured value with the target value, and compare the system pressure with at least one pressure limit. The at least one pressure limit includes a first upper limit specifying a maximum level of a normal operating interval for the pneumatic pressure source system. Furthermore, the control unit is adapted to investigate whether one of at least two decision criteria is fulfilled. If at least one such criterion is found to be fulfilled, the control unit is adapted to control the system pressure to a predefined level by means of a second control signal. The predefined level here depends on which decision criterion that is fulfilled. The control unit is further adapted to control the system pressure to the first upper limit, if the measured value is found to be within a predefined range around the target value prior to that the system pressure reaches the first upper limit.

One important advantage attained by this system is that the instances at which the compressors are operated can be selected relatively freely. Thus, by selecting these instances prudently, the pneumatic control system's overall energy consumption can be made comparatively low. At the same time, an adequate pressure buffer can be maintained. Moreover, if the target value is reachable within the normal operating interval, a buffer pressure is built up representing the difference between a cut-out pressure for the normal operating interval and a pressure level being necessary to reach the target value.

According to one embodiment of this aspect of the invention, the at least one pressure limit comprises a second upper limit specifying a maximum allowed overpressure in the pneumatic pressure source system. Moreover, the control unit is adapted to control the system pressure, such that a current level thereof is maintained if the system pressure reaches the second upper limit prior to that the measured value becomes within the predefined range around the target value. I.e., in a situation wherein it is impossible to produce a sufficiently high system pressure, a highest possible pressure is made available. Preferably, in such situations, the control unit is also adapted to generate an indication of failure to reach the target value. Thus, a user can be informed of the fact that it was impossible to meet a desired target value.

According to yet another embodiment of this aspect of the invention, the control unit is adapted to control the system pressure to a resulting level between the first upper limit and the second upper limit if the measured value is found to be within the predefined range around the target value after that the system pressure has exceeded the first upper limit, however prior to that the system pressure has reached the second upper limit. In other words, the system pressure is controlled to a value within the over-pressure interval. For example, the system pressure may be controlled to a level, which is required to meet the target value. However, according to another embodiment of this aspect of the invention, the system pressure is controlled to a resulting level being approximately equal to the second upper limit, so that a buffer pressure above the required level is built up.

According to still another embodiment of this aspect of the invention, the target value represents an elevation of the chassis element above a surface on which the vehicle is located. Moreover, the sensor means is adapted to register a parameter indicative of the elevation of the chassis element above the surface. Hence, by specifying a target elevation, the chassis element can be automatically controlled such that the chassis element is separated from the ground by a distance equivalent to this elevation.

Alternatively, the target value may represent an axle pressure on a wheel axle to which one of said at least one wheel pair is connected. Here, the sensor means is adapted to register a parameter indicative of the axle pressure. Thereby, by specifying a target axle pressure for a wheel axle, the chassis element can be automatically controlled such that this axle pressure is attained, for example in connection with load distribution.

According to another aspect of the invention, the object is achieved by a motor vehicle, which includes the above-proposed system.

According to another aspect of the invention, the object is achieved by the method described initially, wherein the method involves registering a parameter indicative of a measured value expressing the position relationship between the chassis element and the at least one wheel pair. The method further involves comparing the measured value with the target value, and comparing the system pressure with at least one pressure limit. The at least one pressure limit includes a first upper limit, which specifies a maximum level of a normal operating interval for the pneumatic pressure source system. Moreover, the method involves investigating whether one of at least two decision criteria is fulfilled. If one of said criteria is fulfilled, the method involves controlling the system pressure to a predefined level by means of a second control signal. The predefined level here depends on which decision criterion that is fulfilled. If the measured value is found to be within a predefined range around the target value prior to that the system pressure reaches the first upper limit, the method instead involves controlling the system pressure to the first upper limit. The advantages of this method, as well as the preferred embodiments thereof, are apparent from the discussion hereinabove with reference to the proposed vehicle arrangement.

According to a further aspect of the invention the object is achieved by a computer program product directly loadable into the internal memory of a computer, comprising software for controlling the above proposed method when said program is run on a computer.

According to another aspect of the invention the object is achieved by a computer readable medium, having a program recorded thereon, where the program is to make a computer control the above proposed method.

Further advantages, advantageous features and applications of the present invention will be apparent from the following description and the dependent claims.

### BRIEF DESCRIPTION OF THE DRAWINGS

The present invention is now to be explained more closely by means of embodiments, which are disclosed as examples, and with reference to the attached drawings.
- Figure 1: schematically represents a motor vehicle including a system according to one embodiment of the invention,
- Figure 2: shows the vehicle of Figure 1 during a stage of a proposed control procedure being subsequent to the stage shown in Figure 1,
- Figure 3: depicts a diagram exemplifying how various pneumatic pressure levels may be varied according to one embodiment of the invention,
- Figure 4: shows a flow diagram illustrating the general method according to the invention.

### DESCRIPTION OF EMBODIMENTS OF THE INVENTION

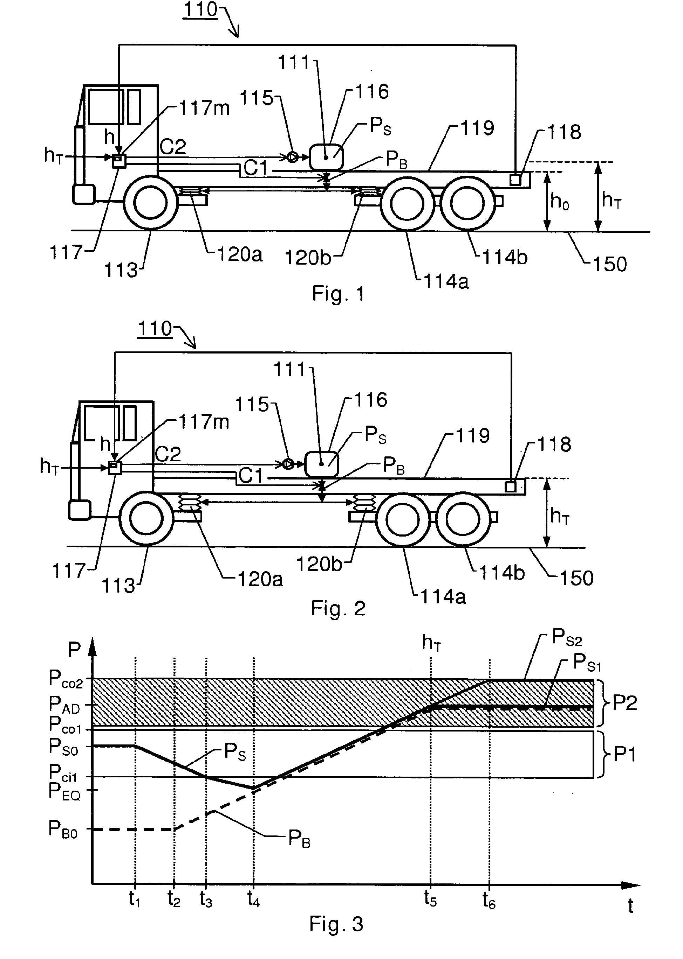

Figure 1 shows a motor vehicle 110, e.g. a truck, according to one embodiment of the invention. The vehicle 110 has a chassis element 119, whose position relative to at least one wheel pair 113, 114a and/or 114b of the vehicle 110 may be varied. To this aim, the vehicle 110 has a pneumatically operated control mechanism, which is adapted to receive an input air flow and influence the position relationship between the chassis element 119 and the at least one wheel pair 113, 114a and/or 114b by varying the input air flow in response to a first control signal C1. For instance, the pneumatically operated control mechanism may include a number of bellows 120a and 120b respectively, or alternative type of gas container having at least one flexible wall being adapted to output a mechanical force in response to an amount of input air.

The vehicle 110 also has a pneumatic pressure source system, e.g. including a compressor 115 and a pressure tank 116, which is adapted to produce a system pressure P_{S}. This pressure P_{S}, in turn, provides the input air flow to the pneumatically operated control mechanism. A control unit 117 in the vehicle 110 is adapted to receive a target value h_{T}, and based thereon, produce the first control signal C1. The target value h_{T} may either be manually entered by an operator (e.g. the driver), or be automatically generated, for example by a another control unit (e.g. a so-called ECU - electronic control unit) in the vehicle 110. A pressure sensor means 111 arranged in pneumatic pressure source system is adapted to register a pressure parameter indicative of the system pressure P_{S}, and to report this parameter to the control unit 117.

Another sensor means 118 is adapted to register a parameter indicative of a measured value h expressing the position relationship between the chassis element 119 and the at least one wheel pair 113, 114a and/or 114b, and to forward data representing the measured value h to the control unit 117. According to one embodiment of the invention, the target value h_{T} represents an elevation of the chassis element 119 above a surface 150 on which the vehicle 110 is located. In this case, the sensor means 118 is adapted to register the parameter h in the form of an elevation of the chassis element 119 above the surface 150. In Figure 1, the vehicle 110 is presumed to have an initial elevation h₀, and the target value h_{T} represents a somewhat higher elevation above the surface 150. The sensor means 118 may employ any known technique to determine the elevation, such as transmission of ultrasonic waves, and/or various forms of electromagnetic signals in the thermal, radio frequency and/or light range of the spectrum. In order to assess the parameter h, the sensor means 118 and the chassis element 119 must have a fixed and well-defined positional interrelationship. However, the exact location of the sensor means 118 is essentially irrelevant. Of course, it is preferable if the sensor means 118 is located where it is relatively protected from physical damages and dirt.

According to another embodiment of the invention (not shown), the target value represents an axle pressure on a wheel axle to which one of said at least one wheel pair 113, 114a and/or 114b is connected. In this case, the sensor means 118 is instead adapted to register a parameter indicative of this axle pressure.

In any case, the control unit 117 is adapted to compare the measured value h with the target value h_{T}, and to compare the system pressure P_{S} with at least one pressure limit. Based on these comparisons, the control unit 117 is adapted to investigate whether one of at least two decision criteria is fulfilled. If such a criterion is found to be fulfilled, the control unit 117 is further adapted to control the system pressure P_{S} to a predefined level by means of a second control signal C2. The predefined level, in turn, depends on which decision criterion that is fulfilled. The decision criteria and the predefined levels will be discussed in detail below with reference to Figure 3.

Figure 2 shows the vehicle of Figure 1 when the chassis element 119 has been elevated, such that the measured value h equals the target value h_{T}, or such that the measured value h is at least sufficiently close to the target value h_{T}, or more precisely within a predefined range around the target value h_{T} (i.e. h = h_{T} ± h_{Δ}, where h_{Δ} represents an acceptable tolerance). As can be seen, in Figure 2 the bellows 120a and 120b are extended to a relatively large degree compared with the situation shown in Figure 1. Depending on various non-linearities in the pressure-to-extension relationship describing the movement of the bellows 120a and 120b, and the amount of load carried by the chassis element 119, the target elevation h_{T} may or may not be possible to reach within a normal operating interval for the system pressure P_{S}.

Turning now to Figure 3, we see a diagram illustrating an example of how a pneumatic pressure P in the pneumatic pressure source system P_{S} (solid line) and the pneumatically operated control mechanism P_{B} (dashed line) respectively may be varied over time t according one embodiment of the invention.

A set of predefined pressure levels are defined, for example specifying a normal pressure interval P1 from P = P_{ci1} to P = P_{co1}, and an overpressure interval P2 from P = P_{co1} to P = P_{co2} respectively. A first upper limit P_{co1} (cut-out P1) sets a maximum level for the normal operating interval P1, and a second upper limit P_{co2} (cut-out P2) sets a maximum level for the overpressure interval P2 of the pneumatic pressure source system 115 and 116 in Figures 1 and 2. Preferably, the first upper limit P_{co1} is also equal to a lower limit (cut-in P2) for the overpressure interval P2, thus avoiding an undefined pressure range between the pressure intervals P1 and P2 respectively.

In the illustrated example, we assume that the pneumatic pressure source system P_{S} initially has a pressure level P_{S0} in the normal pressure interval P1 (i.e. between a first lower limit P_{ci1} (cut-in P1) and the first upper limit P_{co1}) The pneumatically operated control mechanism, however, has a pressure level P_{B} below P_{ci1}. At a first point in time t₁ thereafter, the control unit 117 receives a target value h_{T} designating a desired elevation of the chassis element 119. Therefore, the control unit 117 generates a first control signal C1, which causes pressurized air from the pneumatic pressure source system to be fed into the bellows 120a and 120b of the pneumatically operated control mechanism. As a result, the chassis element 119 starts to be elevated from its current height above the surface 150.

Then, at a second point in time t₂, at least one of the bellows 120a and 120b reaches a point where its pressure-to-extension movement is non-linear and/or the weight carried by the chassis element 119 increases (e.g. due to that a cargo unit is being lift up). Therefore, also the pressure level P_{B} in the pneumatically operated control mechanism starts to increase, and as a further consequence the pneumatic pressure level P_{S} in the source system starts to decrease. At a third, and yet later instance t₃, the system pressure P_{S} has fallen down to the first lower limit P_{ci1} (cut-in P1). This results in that control unit 117 generates a second control signal C2 activating the compressor 115. Since still at t₃, the pressure level P_{B} in the pneumatically operated control mechanism is lower than the system pressure P_{S}, this pressure continues to decrease. Nevertheless, at a yet later instance t₄, the air stored in the pressure tank 116 has been consumed, and the pressure levels P_{B} and P_{S} equalize on a resulting level P_{EQ}.

Here, the resulting level P_{EQ} is below the first lower limit P_{ci1} of the normal pressure interval P1. Hence, in the above-described comparison made by the control unit 117 it is found that P_{EQ} = P_{S} < P_{ci1}. This causes the control unit 117 to generate such a second control signal C2 to the compressor 115 that the system pressure P_{S} continues to be raised. Since the pressure levels P_{S} and P_{B} in the pneumatic pressure source system and the pneumatically operated control mechanism now are equalized, the pressure level P_{B} follows the system pressure level P_{S} during this increase.

According to the invention, the system pressure P_{S} increase continues until a decision criterion with respect to the measured value h and the target value h_{T} is fulfilled. Specifically, the criterion in question is regarded as fulfilled if the measured value h becomes within the predefined range around the target value h_{T}. Ideally, the criterion becomes fulfilled before system pressure P_{S} reaches the first upper limit P_{co1} (cut-out P1). In this example, however, the measured value h does not become within the predefined range around the target value h_{T} before the system pressure P_{S} (and the pressure P_{B} in the pneumatically operated control mechanism) has reached this limit P_{co1}. Instead, at a fifth point in time t₅, an adequate pressure level P_{AD} is reached, where P_{co1} < P_{AD} < P_{co2}.

Nevertheless, if the measured value h had been found to be within the predefined range around the target value h_{T} already before the system pressure P_{S} reached the first upper limit P_{co1}, according to one embodiment of the invention, the control unit 117 is adapted to control the system pressure P_{S} to the first upper limit P_{co1}. Namely, thereby, a useful buffer pressure is built up in the pneumatic pressure source system.

According to another embodiment of the invention, the control unit 117 is adapted to control the system pressure P_{S}, such that a current level thereof is maintained if the system pressure P_{S} reaches the second upper limit P_{co2} prior to that the measured value h becomes within the predefined range around the target value h_{T}. This means that the target value h_{T} cannot be met. However, by maintaining the system pressure at the level P_{co2} a closest possible adjustment of the chassis element 119 is achieved. Preferably, in connection with such a situation, the control unit 117 is adapted to generate an indication of that the target value h_{T} could not be reached. Thus, an operator of the vehicle 110 may take appropriate measures.

According to one embodiment of the invention, the control unit 117 is adapted to control the system pressure P_{S} to a resulting level above the first upper limit P_{co1}, however below the second upper limit P_{co2}, if the measured value h is found to be within the predefined range around the target value h_{T} after that the system pressure P_{S} has exceeded the first upper limit P_{co1}, however prior to that the system pressure P_{S} has reached the second upper limit P_{co2}. The resulting level P_{S1} may be essentially equal to the level P_{AD} being adequate to reach the target value h_{T}. Thus, no surplus overpressure is created.

According to another embodiment of the invention, the control unit 117 is instead adapted to adjust the system pressure P_{S} to a resulting level P_{S2} being approximately equal to the second upper limit P_{co2}, if the measured value h is found to be within the predefined range around the target value h_{T} after that the system pressure P_{S} has exceeded the first upper limit P_{co1}, however prior to that the system pressure P_{S} has reached the second upper limit P_{co2}. Thus, a buffer pressure above the adequate level P_{AD} is created, which can be used to handle future target values h_{T} requiring high pressure levels. In the example illustrated in Figure 3, the system pressure P_{S} reaches the resulting level P_{S2} at a yet later point in time t₆.

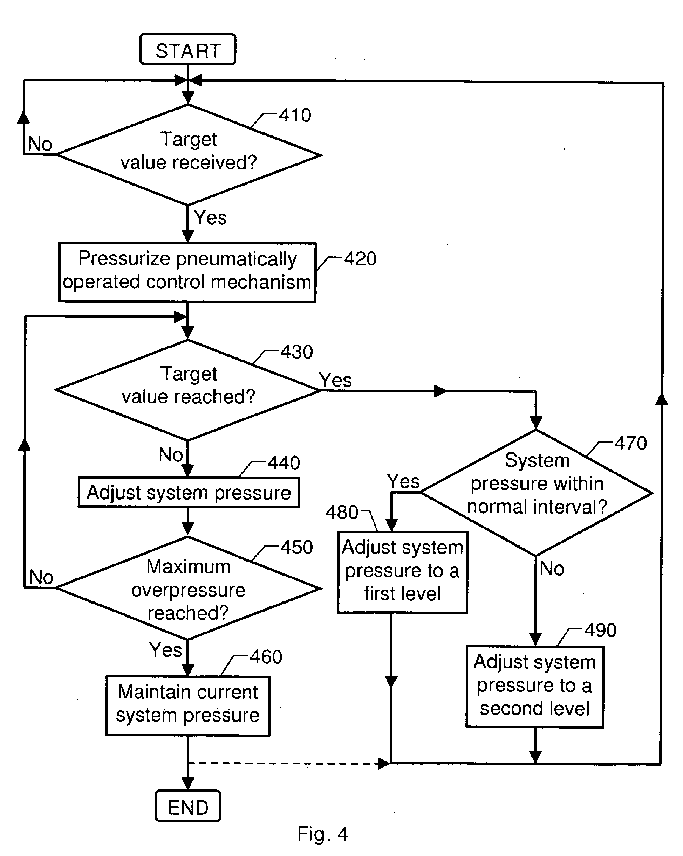

In order to sum up, the general method according to the invention to adjust a chassis element of a motor vehicle will be described below with reference to the flow diagram in Figure 4.

A first step 410 checks whether or not a target value has been received in the control unit 117. If no such value has been received, the procedure loops back and stays in the step 410. Otherwise, a step 420 follows, which pressurizes the pneumatically operated control mechanism for adjusting the chassis element relative to the at least one wheel pair. Subsequently, a step 430 checks whether or not the target value has been reached, and if so, a step 470 follows. Otherwise, the procedure continues to a step 440, wherein the system pressure is adjusted. (The only case being interesting with regard to the invention relates to a system pressure increase. However, a decrease of this pressure is not excluded in the adjustment made in the step 440). After the step 440, a step 450 checks whether or not the maximum overpressure has been reached, and if so, a step 460 follows. Otherwise, the procedure loops back to the step 430 again.

The entry into the step 460 mentioned above is equivalent to the case wherein the system pressure reaches the second upper limit P_{co2} before the measured value h comes within the predefined range around the target value h_{T}, and therefore the target value h_{T} cannot be met. The step 460 maintains the current level of the system pressure. Hence, a closest possible adjustment of the chassis element 119 is achieved. As already mentioned, it is preferable that also an indication be generated, which reflects the fact that the target value h_{T} could not be reached. After the step 460, the procedure may either end, or loop back to the step 410 (as designated by the dashed arrow).

The step 470 checks whether or not the system pressure lies within the normal interval (i.e. P_{cio1} < P_{S} < P_{co1} in Figure 3). If the system pressure is found to be within the normal interval, a step 480 follows, which adjusts the system pressure to a first predefined level, for example the first upper limit P_{co1} that specifies the upper level of the normal interval. Subsequently, the procedure loops back to the step 410. If however, in the step 470, the system pressure is found to be outside the normal interval, a step 490 follows, which adjusts the system pressure to a second predefined level, for example the level P_{AD} being adequate to reach the target value h_{T}. Then, the procedure loops back to the step 410.

All of the process steps, as well as any sub-sequence of steps, described with reference to the Figure 4 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code; object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

## Claims

1. A control system for adjusting a chassis element (119) of a motor vehicle (110), the system comprising:
a pneumatically operated control mechanism adapted to receive an input air flow, and influence a position relationship between the chassis element (119) and at least one wheel pair (113; 114a, 114b) of the vehicle (110) by varying the input air flow in response to a first control signal (C1),
a pneumatic pressure source system (115; 116) adapted to produce a system pressure (P_{S}) and deliver the input air flow to the pneumatically operated control mechanism,
a control unit (117) adapted to receive a target value (h_{T}), and based thereon, produce the first control signal (C1), and
a pressure sensor means (111) adapted to register a pressure parameter indicative of the system pressure (P_{S}), a sensor means (118) adapted to register a parameter indicative of a measured value (h) expressing the position relationship between the chassis element (119) and the at least one wheel pair (113; 114a, 114b), and forward data representing the measured value (h) to the control unit (117), and the control unit (117) is adapted to:
compare the measured value (h) with the target value (h_{T}),
**characterized in that** the control unit is further adapted to compare the system pressure (P_{S}) with at least one pressure limit (P_{co1}; P_{co2}), the at least one pressure limit comprising a first upper limit (P_{co1}) specifying a maximum level of a normal operating interval for the pneumatic pressure source system (115; 116),
investigate whether one of at least two decision criteria is fulfilled, and if one of said criteria is fulfilled,
control the system pressure (P_{S}) to a predefined level (P_{co1}, P_{co2}, P_{S1}; P_{S2}) by means of a second control signal (C2), the predefined level depending on which decision criterion that is fulfilled, and
control the system pressure (P_{S}) to the first upper limit (P_{co1}), if the measured value (h) is found to be within a predefined range around the target value (h_{T}) prior to that the system pressure (P_{S}) reaches the first upper limit (P_{co1}).

2. The system according to claim 1, **characterized in that** the at least one pressure limit comprises a second upper limit (P_{co2}) specifying a maximum allowed overpressure in the pneumatic pressure source system (115; 116), and the control unit (117) is adapted to control the system pressure (P_{S}) such that a current level thereof is maintained if the system pressure (P_{S}) reaches the second upper limit (P_{co2}) prior to that the measured value (h) becomes within the predefined range around the target value (h_{T}).

3. The system according to claim 2, **characterized in that** the control unit (117) is adapted to generate an indication of failure to reach the target value (h_{T}) if the system pressure (P_{S}) reaches the second upper limit (P_{co2}) prior to that the measured value (h) becomes within the predefined range around the target value (h_{T}).

4. The system according to any one of the claims 2 or 3, **characterized in that** the control unit (117) is adapted to control the system pressure (P_{S}) to a resulting level (P_{S1}; P_{S2}) above the first limit (P_{co1}) however below the second upper limit (P_{co2}) if the measured value (h) is found to be within the predefined range around the target value (h_{T}) after that the system pressure (P_{S}) has exceeded the first upper limit (P_{co1}) however prior to that the system pressure (P_{S}) has reached the second upper limit (P_{co2}).

5. The system according to claim 4, **characterized in that** the resulting level (P_{S2}) is approximately equal to the second upper limit (P_{co2}).

6. The system according to any one of the preceding claims, **characterized in that** the target value (h_{T}) represents an elevation of the chassis element (119) above a surface (150) on which the vehicle (110) is located, and the sensor means (118) is adapted to register a parameter (h) indicative of the elevation of the chassis element (119) above the surface (150).

7. The system according to any one of the claims 1 to 5, **characterized in that** the target value represents an axle pressure on a wheel axle to which one of said at least one wheel pair (113; 114a, 114b) is connected, and the sensor means (118) is adapted to register a parameter indicative of the axle pressure.

8. A motor vehicle (110) comprising the control system according to any one of the preceding claims.

9. A method of adjusting a chassis element (119) of a motor vehicle (110), the method comprising:
influencing a position relationship between the chassis element (119) and at least one wheel pair (113; 114a, 114b) of the vehicle (110) based on adjustment of an input air flow in response to a first control signal (C1),
producing the control signal (C1) based on a target value (h_{T}),
delivering the input air flow to the pneumatically operated control mechanism from a pneumatic pressure source system (115; 116) which produces a system pressure (P_{S}), and
registering a pressure parameter indicative of the system pressure (P_{S}),
registering a parameter indicative of a measured value (h) expressing the position relationship between the chassis element (119) and the at least one wheel pair (113; 114a, 114b), comparing the measured value (h) with the target value (h_{T}),
**characterized by** comparing the system pressure (P_{S}) with at least one pressure limit (P_{co1}, P_{co2}), the at least one pressure limit comprising a first upper limit (P_{co1}) specifying a maximum level of a normal operating interval for the pneumatic pressure source system (115; 116),
investigating whether one of at least two decision criteria is fulfilled, and if one of said criteria is fulfilled,
controlling the system pressure (P_{S}) to a predefined level (P_{co1}, P_{co2}, P_{S1}; P_{S2}) by means of a second control signal (C2), the predefined level depending on which decision criterion that is fulfilled, and
controlling the system pressure (P_{S}) to the first upper limit (P_{co1}), if the measured value (h) is found to be within a predefined range around the target value (h_{T}) prior to that the system pressure (P_{S}) reaches the first upper limit (P_{co1}).

10. The method according to claim 9, **characterized by** the at least one pressure limit comprising a second upper limit (P_{co2}) specifying a maximum allowed overpressure in the pneumatic pressure source system (115; 116), and the method comprising controlling the system pressure (P_{S}) such that a current level thereof is maintained if the system pressure (P_{S}) reaches the second upper limit (P_{co2}) prior to that the measured value (h) becomes within the predefined range around the target value (h_{T}).

11. The method according to claim 10, **characterized by** the generating an indication of failure to reach the target value (h_{T}) if the system pressure (P_{S}) reaches the second upper limit (P_{co2}) prior to that the measured value (h) becomes within the predefined range around the target value (h_{T}).

12. The method according to any one of the claims 10 or 11, **characterized by** controlling the system pressure (P_{S}) to a resulting level (P_{S1}; P_{S2}) above the first upper limit (P_{co1}) however below the second upper limit (P_{co2}) if the measured value (h) is found to be within the predefined range around the target value (h_{T}) after that the system pressure (P_{S}) has exceeded the first upper limit (P_{co1}) however prior to that the system pressure (P_{S}) has reached the second upper limit (P_{co2}).

13. The method according to claim 12, **characterized by** the resulting level (P_{S2}) being approximately equal to the second upper limit (P_{co2}).

14. The method according to any one of the claims 9 to 13, **characterized by** the target value (h_{T}) representing an elevation of the chassis element (119) above a surface (150) on which the vehicle (110) is located, and the method comprising registering a parameter (h) indicative of the elevation of the chassis element (119) above the surface (150).

15. The method according to any one of the claims 9 to 13, **characterized by** the target value representing an axle pressure on a wheel axle to which one of said at least one wheel pair (113; 114a, 114b) is connected, and the method comprising registering a parameter indicative of the axle pressure to represent then measured value.

16. A computer program product directly loadable into the internal memory of a computer, comprising software for controlling the steps of any of the claims 9 to 15 when said program is run on the computer.

17. A computer readable medium (117m), having a program recorded thereon, where the program is to make a computer control the steps of any of the claims 9 to 15.

## Patentansprüche

1. Steuersystem zum Einstellen eines Chassis-Elements (119) eines Kraftfahrzeugs (110), mit:
einem pneumatisch betriebenen Steuermechanismus, der dazu eingerichtet ist, einen Eingangsluftstrom aufzunehmen, und ein Positionsverhältnis zwischen dem Chassis-Element (119) und wenigstens einem Radpaar (113; 114a, 114b) des Kraftfahrzeugs (110) zu beeinflussen durch Variation des Eingangsluftstroms in Antwort auf einen erstes Steuersignal (C1),
einem Pneumatikdruckerzeugungssystem (115; 116), das dazu eingerichtet ist, einen Systemdruck (P_{S}) zu erzeugen, und den Eingangsluftstrom dem pneumatisch betriebenen Steuermechanismus zuzuführen,
einer Steuereinheit (117), die dazu eingerichtet ist, einen Zielwert (h_{T}) zu erhalten, und darauf basierend das erste Steuersignal (C1) zu erzeugen, und
einer Drucksensoreinrichtung (111), die dazu eingerichtet ist, einen Druckparameter aufzuzeichnen, der den Systemdruck (P_{F}) reflektiert,
einer Sensoreinrichtung (118), die dazu eingerichtet ist, einen Parameter aufzuzeichnen, der einen Messwert (h) reflektiert, der ein Positionsverhältnis zwischen dem Chassis-Element (119) und dem wenigstens einen Radpaar (113; 114a, 114b) ausdrückt, und Daten, die den Messwert (h) repräsentieren, an die Steuereinheit (117) weiterzuleiten,
wobei die Steuereinheit (117) dazu eingerichtet ist, den Messwert (h) mit dem Zielwert (h_{T}) zu vergleichen,
**dadurch gekennzeichnet, dass** die Steuereinheit weiterhin dazu eingerichtet ist, den Systemdruck (P_{S}) mit wenigstens einem Druckgrenzwert (P_{co1}; P_{co2}) zu vergleichen, wobei der wenigstens eine Druckgrenzwert einen oberen Grenzwert (P_{co1}) beinhaltet, der einen Maximalwert eines normalbetriebenen Intervalls für das Pneumatikdruckerzeugungssystem (115; 116) spezifiziert,
zu ermitteln, ob eines von wenigstens zwei Entscheidungskriterien erfüllt ist, wobei, wenn eines der Kriterien erfüllt ist,
den Systemdruck (P_{S}) auf einen bestimmten Wert (P_{co1}; P_{co2}, P_{S1}; P_{S2}) regelt unter Verwendung eines zweiten Steuersignals (C2), wobei der bestimmte Wert davon abhängt, welches Entscheidungskriterium erfüllt ist, und
den Systemdruck (P_{S}) auf den ersten oberen Grenzwert (P_{co1}) regelt, wenn der Messwert (h) innerhalb eines bestimmten Bereichs um den Zielwert (h_{T}) fällt, bevor der Systemdruck (P_{S}) den ersten oberen Grenzwert (P_{co1}) erreicht.

2. System nach Anspruch 1, **dadurch gekennzeichnet, dass** der wenigstens eine obere Druckgrenzwert einen zweiten oberen Grenzwert (P_{co2}) aufweist, der einen maximal erlaubten Überdruck in dem Pneumatikdruckerzeugungssystem (115; 116) spezifiziert, wobei die Steuereinheit (117) dazu eingerichtet ist, den Systemdruck (P_{S}) so zu steuern, dass ein momentaner Wert davon aufrechterhalten wird, wenn der Systemdruck (P_{S}) den zweiten oberen Grenzwert (P_{co2}) erreicht, bevor der Messwert (h) in den bestimmten Bereich um den Zielwert (h_{T}) fällt.

3. System nach Anspruch 2, **dadurch gekennzeichnet, dass** die Steuereinheit (117) dazu eingerichtet ist, zu signalisieren, dass der Zielwert (h_{T}) nicht erreicht werden kann, wenn der Systemdruck (P_{S}) den zweiten oberen Grenzwert (P_{co2}) erreicht, bevor der Messwert (h) in den Bereich um den Zielwert (h_{T}) fällt.

4. System nach einem der Ansprüche 2 oder 3, **dadurch gekennzeichnet, dass** die Steuereinheit (117) dazu eingerichtet ist, den Systemdruck (P_{S}) auf einen resultierenden Wert (P_{S1}; P_{S2}) oberhalb des ersten Grenzwerts (P_{co1}), jedoch unterhalb des zweiten oberen Grenzwerts (P_{co2}) zu regeln, wenn der Messwert (h) innerhalb des bestimmten Bereichs um den Zielwert (h_{T}) fällt, nachdem der Systemdruck (P_{S}) den ersten oberen Grenzwert (P_{co1}) überschritten hat, jedoch bevor der Systemdruck (P_{S}) den zweiten oberen Grenzwert (P_{co2}) erreicht hat.

5. System nach Anspruch 4, **dadurch gekennzeichnet, dass** der resultierende Wert (P_{S2}) ungefähr gleich dem zweiten oberen Grenzwert (P_{co2}) ist.

6. System nach einem der vorangehenden Ansprüche, wobei der Zielwert (h_{T}) eine Anhebung des Chassis-Elements (119) über eine Oberfläche (150), auf der sich das Kraftfahrzeug (110) befindet, repräsentiert, und wobei die Sensoreinrichtung (118) dazu eingerichtet ist, einen Parameter (h) aufzuzeichnen, der das Anheben des Chassis-Elements (119) über die Oberfläche (150) hinaus repräsentiert.

7. System nach einem der Ansprüche 1 bis 5, **dadurch gekennzeichnet, dass** der Zielwert einen Achsdruck auf eine Radachse repräsentiert, mit der eines des wenigstens einen Radpaars (113, 114a, 114b) verbunden ist, und wobei die Sensoreinrichtung (118) dazu eingerichtet ist, einen Parameter aufzuzeichnen, der den Achsdruck repräsentiert.

8. Kraftfahrzeug (110), mit dem Steuersystem gemäß einem der voranstehenden Ansprüche.

9. Verfahren zum Einstellen eines Chassis-Elements (119) eines Kraftfahrzeugs (110), aufweisend:
Beeinflussen eines Positionsverhältnisses zwischen dem Chassis-Element (119) und wenigstens einem Radpaar (113; 114a, 114b) des Kraftfahrzeugs (110) basierend auf einem Einstellen eines Eingangsluftstroms in Antwort auf ein erstes Steuersignal (C1),
Erzeugen des Steuersignals (C1) basierend auf einem Zielwert (h_{T}),
Führen des Eingangsluftstroms zu dem pneumatisch betriebenen Steuermechanismus von einem Pneumatikdruckerzeugungssystem (115; 116), das einen Systemdruck (Ps) erzeugt, und
Aufzeichnen eines Druckparameters, der den Systemdruck (P_{S}) repräsentiert, Aufzeichnen eines Parameters, der einen Messwert (h) repräsentiert, welcher ein Positionsverhältnis zwischen dem Chassis-Element (119) und dem wenigstens einen Radpaar (113; 114a, 114b) repräsentiert,
Vergleichen des Messwerts (h) mit dem Zielwert (h_{T}),
**gekennzeichnet durch**
Vergleichen des Systemdrucks (P_{S}) mit wenigstens einem Druckgrenzwert (P_{co1}, P_{co2}),
wobei der wenigstens eine Druckgrenzwert einen ersten oberen Grenzwert (P_{co1}) aufweist, der einen Maximalwert eines normalbetriebenen Intervalls für das Pneumatikdruckerzeugungssystem (115, 116) spezifiziert,
Ermitteln, ob eines von wenigstens zwei Entscheidungskriterien erfüllt ist, und, wenn eines der Kriterien erfüllt ist,
Steuern des Systemdrucks (P_{S}) auf einen bestimmten Wert (P_{co1},P_{co2}, P_{S1}; P_{S2}) unter Verwendung eines zweiten Steuersignals (C2), wobei der bestimmte Wert davon abhängt, welches Entscheidungskriterium erfüllt ist, und
Steuern des Systemdrucks (P_{S}) auf den ersten oberen Grenzwert (P_{co1}), wenn der Messwert (h) innerhalb eines bestimmten Bereichs um den Zielwert (h_{P}) fällt, bevor der Systemdruck (P_{S}) den ersten oberen Grenzwert (P_{co1}) erreicht.

10. Verfahren nach Anspruch 9, **dadurch gekennzeichnet, dass** der wenigstens eine Druckgrenzwert einen zweiten oberen Grenzwert (P_{co2}) aufweist, der einen maximal erlaubten Überdruck in dem Pneumatikdruckerzeugungssystem (115; 116) spezifiziert, wobei das Verfahren das Steuern des Systemdrucks (P_{S}) beinhaltet, derart, dass ein momentaner Wert davon aufrechterhalten wird, wenn der Systemdruck (P_{S}) den zweiten oberen Grenzwert (P_{co2}) erreicht, bevor der Messwert (h) in den bestimmten Bereich um den Zielwert (h_{T}) fällt.

11. Verfahren nach Anspruch 10, **gekennzeichnet durch** das Signalisieren, dass der Grenzwert (h_{T}) nicht erreicht wird, wenn der Systemdruck (P_{S}) den zweiten oberen Grenzwert (P_{co2}) erreicht, bevor der Messwert (h) in den bestimmten Bereich um den Zielwert (h_{T}) fällt.

12. Verfahren nach einem der Ansprüche 10 oder 11, **gekennzeichnet durch** Steuern des Systemdrucks (P_{S}) auf einen resultierenden Wert (P_{S1}; P_{S2}) oberhalb des ersten Grenzwerts (P_{co1}), jedoch unterhalb des zweiten oberen Grenzwerts (P_{co2}), wenn der Messwert (h) innerhalb des bestimmten Bereichs um den Zielwert (h_{T}) fällt, nachdem der Systemdruck (P_{S}) den ersten oberen Grenzwert (P_{co1}) überschritten hat, jedoch bevor der Systemdruck (P_{S}) den zweiten oberen Grenzwert (P_{co2}) erreicht hat.

13. Verfahren nach Anspruch 12, **dadurch gekennzeichnet, dass** der resultierende Wert (P_{S2}) ungefähr dem zweiten oberen Grenzwert (P_{co2}) entspricht.

14. Verfahren nach einem der Ansprüche 9 bis 13, **dadurch gekennzeichnet, dass** der Zielwert (h_{T}) eine Anhebung des Chassis-Elements (119) über eine Oberfläche (150) hinaus repräsentiert, oberhalb derer dass Fahrzeug (110) vorgesehen ist, wobei das Verfahren das Aufzeichnen eines Parameters (h) beinhaltet, der das Anheben des Chassis-Elements (119) über die Oberfläche (150) hinaus repräsentiert.

15. Verfahren nach einem der Ansprüche 9 bis 13, **dadurch gekennzeichnet, dass** der Zielwert einen Achsdruck repräsentiert, der auf eine Fahrzeugachse ausgeübt wird, mit welcher eines des wenigstens einen Radpaars (113; 114a, 114b) verbunden ist, und wobei das Verfahren das Aufzeichnen eines Parameters beinhaltet, der den Achsdruck repräsentiert, um den Messwert zu repräsentieren.

16. Computerprogrammprodukt, das direkt in den internen Speicher eines Computers ladbar ist, und das Software aufweist, um die Schritte einer der Ansprüche 9 bis 15 zu steuern, wenn das Programm auf dem Computer ausgeführt wird.

17. Computer-lesbares Medium (117m) mit einem darauf aufgezeichneten Programm, wobei das Programm dazu eingerichtet ist, einen Computer die Schritte von einem der Ansprüche 9 bis 15 steuern zu lassen.

## Revendications

1. Système de commande pour l'ajustement d'un élément de châssis (119) d'un véhicule à moteur (110), le système comprenant :
un mécanisme de commande pneumatique conçu pour recevoir un flux d'air entrant, et influencer une relation de position entre l'élément de châssis (119) et au moins une paire de roues (113 ; 114a, 114b) du véhicule (110) en faisant varier le flux d'air entrant en réponse à un premier signal de commande (C1),
un système source de pression pneumatique (115 ; 116) conçu pour produire une pression système (P_{S}) et délivrer le flux d'air entrant au mécanisme de commande pneumatique,
une unité de commande (117) conçue pour recevoir une valeur cible (h_{T}) et produire, à partir de celle-ci, le premier signal de commande (C1), et
un moyen capteur de pression (111) conçu pour enregistrer un paramètre de pression indicatif de la pression système (P_{S}), un moyen capteur (118) conçu pour enregistrer un paramètre indicatif d'une valeur mesurée (h) exprimant la relation de position entre l'élément de châssis (119) et l'au moins une paire de roues (113 ; 114a, 114b), et transmettre des données représentant la valeur mesurée (h) à l'unité de commande (117), et l'unité de commande (117) est conçue pour :
comparer la valeur mesurée (h) à la valeur cible (h_{T}),
**caractérisé en ce que** l'unité de commande est en outre conçue pour comparer la pression système (P_{S}) à au moins une limite de pression (P_{co1} ; P_{co2}), l'au moins une limite de pression comprenant une première limite supérieure (P_{co1}) spécifiant un niveau maximal d'un intervalle de fonctionnement normal pour le système source de pression pneumatique (115 ; 116),
déterminer si l'un d'au moins deux critères de décision est rempli, et si l'un desdits critères est rempli,
réguler la pression système (Ps) à un niveau prédéfini (P_{co1}, P_{co2}, P_{S1} ; P_{S2}) au moyen d'un deuxième signal de commande (C2), le niveau prédéfini dépendant de celui des critères de décision qui est rempli, et
réguler la pression système (Ps) à la première limite supérieure (P_{co1}) si la valeur mesurée (h) est trouvée comme étant comprise dans une plage prédéfinie autour de la valeur cible (h_{T}) avant que la pression système (P_{S}) atteigne la première limite supérieure (P_{co1}).

2. Système selon la revendication 1, **caractérisé en ce que** l'au moins une limite de pression comprend une seconde limite supérieure (P_{co2}) spécifiant une surpression maximale autorisée dans le système source de pression pneumatique (115 ; 116), et l'unité de commande (117) est conçue pour réguler la pression système (P_{S}) de telle sorte que son niveau courant soit maintenu si la pression système (P_{S}) atteint la seconde limite supérieure (P_{co2}) avant que la valeur mesurée (h) devienne comprise dans la plage prédéfinie autour de la valeur cible (h_{T}).

3. Système selon la revendication 2, **caractérisé en ce que** l'unité de commande (117) est conçue pour générer une indication d'échec à atteindre la valeur cible (h_{T}) si la pression système (P_{S}) atteint la seconde limite supérieure (P_{co2}) avant que la valeur mesurée (h) devienne comprise dans la plage prédéfinie autour de la valeur cible (h_{T}).

4. Système selon l'une quelconque des revendications 2 ou 3, **caractérisé en ce que** l'unité de commande (117) est conçue pour réguler la pression système (P_{S}) à un niveau résultant (P_{S1} ; P_{S2}) supérieur à la première limite (P_{co1}), mais inférieur à la seconde limite supérieure (P_{co2}), si la valeur mesurée (h) est trouvée comme étant comprise dans la plage prédéfinie autour de la valeur cible (h_{T}) après que la pression système (P_{S}) a dépassé la première limite supérieure (P_{co1}), mais avant que la pression système (P_{S}) ait atteint la seconde limite supérieure (P_{co2}).

5. Système selon la revendication 4, **caractérisé en ce que** le niveau résultant (P_{S2}) est approximativement égal à la seconde limite supérieure (P_{co2}).

6. Système selon l'une quelconque des revendications précédentes, **caractérisé en ce que** la valeur cible (h_{T}) représente une élévation de l'élément de châssis (119) au-dessus d'une surface (150) sur laquelle se trouve le véhicule (110), et le moyen capteur (118) est conçu pour enregistrer un paramètre (h) indicatif de l'élévation de l'élément de châssis (119) au-dessus de la surface (150).

7. Système selon l'une quelconque des revendications 1 à 5, **caractérisé en ce que** la valeur cible représente une pression d'essieu sur un essieu de roues auquel est attachée ladite au moins une paire de roues (113 ; 114a, 114b), et le moyen capteur (118) est conçu pour enregistrer un paramètre indicatif de la pression d'essieu.

8. Véhicule à moteur (110) comprenant le système de commande selon l'une quelconque des revendications précédentes.

9. Procédé d'ajustement d'un élément de châssis (119) d'un véhicule à moteur (110), le procédé comprenant les étapes suivantes :
influencer une relation de position entre l'élément de châssis (119) et au moins une paire de roues (113 ; 114a, 114b) du véhicule (110) en fonction de l'ajustement d'un flux d'air entrant en réponse à un premier signal de commande (C1),
produire le signal de commande (C1) en fonction d'une valeur cible (h_{T}),
délivrer le flux d'air entrant au mécanisme de commande pneumatique depuis un système source de pression pneumatique (115 ; 116) qui produit une pression système (P_{S}), et
enregistrer un paramètre de pression indicatif de la pression système (P_{S}),
enregistrer un paramètre indicatif d'une valeur mesurée (h) exprimant la relation de position entre l'élément de châssis (119) et l'au moins une paire de roues (113 ; 114a, 114b),
comparer la valeur mesurée (h) à la valeur cible (h_{T}),
**caractérisé par** les étapes consistant à comparer la pression système (P_{S}) à au moins une limite de pression (P_{co1}, P_{co2}), l'au moins une limite de pression comprenant une première limite supérieure (P_{co1}) spécifiant un niveau maximal d'un intervalle de fonctionnement normal pour le système source de pression pneumatique (115 ; 116),
déterminer si l'un d'au moins deux critères de décision est rempli, et si l'un desdits critères est rempli,
réguler la pression système (Ps) à un niveau prédéfini (P_{co1}, P_{co2}, P_{S1} ; P_{S2}) au moyen d'un deuxième signal de commande (C2), le niveau prédéfini dépendant de celui des critères de décision qui est rempli, et
réguler la pression système (Ps) à la première limite supérieure (P_{co1}) si la valeur mesurée (h) est trouvée comme étant comprise dans une plage prédéfinie autour de la valeur cible (h_{T}) avant que la pression système (P_{S}) atteigne la première limite supérieure (P_{co1}).

10. Procédé selon la revendication 9, **caractérisé par le fait que** l'au moins une limite de pression comprend une seconde limite supérieure (P_{co2}) spécifiant une surpression maximale autorisée dans le système source de pression pneumatique (115 ; 116), et que le procédé comprend la régulation de la pression système (P_{S}) de telle sorte que son niveau courant soit maintenu si la pression système (P_{S}) atteint la seconde limite supérieure (P_{co2}) avant que la valeur mesurée (h) devienne comprise dans la plage prédéfinie autour de la valeur cible (h_{T}).

11. Procédé selon la revendication 10, **caractérisé par** la génération d'une indication d'échec à atteindre la valeur cible (h_{T}) si la pression système (P_{S}) atteint la seconde limite supérieure (P_{co2}) avant que la valeur mesurée (h) devienne comprise dans la plage prédéfinie autour de la valeur cible (h_{T}).

12. Procédé selon l'une quelconque des revendications 10 ou 11, **caractérisé par** la régulation de la pression système (P_{S}) à un niveau résultant (P_{S1} ; P_{S2}) supérieur à la première limite supérieure (P_{co1}), mais inférieur à la seconde limite supérieure (P_{co2}), si la valeur mesurée (h) est trouvée comme étant comprise dans la plage prédéfinie autour de la valeur cible (h_{T}) après que la pression système (P_{S}) a dépassé la première limite supérieure (P_{co1}), mais avant que la pression système (P_{S}) ait atteint la seconde limite supérieure (P_{co2}).

13. Procédé selon la revendication 12, **caractérisé par le fait que** le niveau résultant (P_{S2}) est approximativement égal à la seconde limite supérieure (P_{co2}).

14. Procédé selon l'une quelconque des revendications 9 à 13, **caractérisé par le fait que** la valeur cible (h_{T}) représente une élévation de l'élément de châssis (119) au-dessus d'une surface (150) sur laquelle se trouve le véhicule (110), et que le procédé comprend l'enregistrement d'un paramètre (h) indicatif de l'élévation de l'élément de châssis (119) au-dessus de la surface (150).

15. Procédé selon l'une quelconque des revendications 9 à 13, **caractérisé par le fait que** la valeur cible représente une pression d'essieu sur un essieu de roues auquel est attachée ladite au moins une paire de roues (113 ; 114a, 114b), et que le procédé comprend l'enregistrement d'un paramètre indicatif de la pression d'essieu pour ainsi représenter la valeur mesurée.

16. Produit de programme informatique pouvant être chargé directement dans la mémoire interne d'un ordinateur, comprenant un logiciel permettant la mise en oeuvre des étapes selon l'une quelconque des revendications 9 à 15 lorsque ledit programme est exécuté sur l'ordinateur.

17. Support lisible par un ordinateur (117m), sur lequel est enregistré un programme, lequel programme étant destiné à faire en sorte qu'un ordinateur mette en oeuvre les étapes selon l'une quelconque des revendications 9 à 15.
